# FASCICULE DE BREVET EUROPEEN

(11) **EP 2 103 240 B1**
(45) Date de publication et mention de la délivrance du brevet: **30.05.2012**
(21) Numéro de dépôt: 09356029.0
(22) Date de dépôt: 18.03.2009
(51) Int. Cl.: A47J 37/12, A47J 27/21

(54) **Appareil électrique de cuisson comportant un socle d'alimentation électrique et de vidange**
Elektrisches Kochgerät, das einen Sockel zur Stromeinspeisung und zum Entleeren umfasst
Electrical cooking device comprising an electrical supply and drainage base

(30) Priorité: 20.03.2008 FR 0801529
(43) Date de publication de la demande: 23.09.2009
(73) Titulaire: SEB S.A., 69130 Ecully (FR)
(72) Inventeur: Mathey, Olivier, 01540 Vonnas (FR)
(74) Mandataire: Kiehl, Hubert

(56) Documents cités:
- FR-A- 2 858 537

## Description

La présente invention concerne le domaine technique des appareils électriques de cuisson comprenant une cuve prévue pour contenir un bain de cuisson. La présente invention concerne notamment, mais non exclusivement les friteuses.

Il est connu du document FR 2 858 537 un appareil électrique de cuisson, notamment une friteuse électrique, comprenant une cuve appartenant à un sous ensemble amovible susceptible d'être mis en place sur un socle d'alimentation électrique pour réaliser les opérations de cuisson. La cuve est munie d'un dispositif de vidange. A cet effet la cuve est également susceptible d'être mise en place sur un socle de vidange, pour procéder à la vidange du bain de cuisson. Une telle construction permet de faciliter le nettoyage de la cuve et d'obtenir une meilleure conservation du bain de cuisson. Une telle construction présente toutefois l'inconvénient de nécessiter un déplacement de la cuve pour réaliser la vidange du bain de cuisson.

Un objet de la présente invention est de proposer un appareil de cuisson comportant une cuve munie d'un dispositif de vidange, dont l'utilisation soit simplifiée.

Un autre objet de la présente invention est de proposer un appareil de cuisson comportant une cuve munie d'un dispositif de vidange, dans lequel la vidange du bain de cuisson est facilitée.

Un autre objet de la présente invention est de proposer un appareil de cuisson comportant une cuve munie d'un dispositif de vidange, qui présente une construction plus compacte.

Ces objets sont atteints avec un appareil électrique de cuisson, notamment friteuse électrique, comprenant un socle d'alimentation électrique recevant un sous-ensemble amovible comportant une cuve prévue pour recevoir un bain de cuisson, la cuve étant associée à des moyens de chauffe, la cuve étant munie d'un dispositif de vidange prévu pour un déversement du bain de cuisson dans un réceptacle de vidange, du fait que le réceptacle de vidange est agencé dans le socle d'alimentation électrique. Ainsi il n'est plus nécessaire de déplacer la cuve pour pouvoir procéder à la vidange du bain de cuisson. La cuve peut être simplement retirée du sous-ensemble d'alimentation électrique, notamment à des fins de nettoyage.

Selon un mode de réalisation avantageux, la cuve est agencée dans un boîtier. Cette disposition permet notamment de protéger l'utilisateur des parois latérales de la cuve comportant un bain de cuisson porté à haute température.

Alors, selon une forme de réalisation avantageuse, le boîtier est prévu pour reposer sur le socle d'alimentation électrique. Cette disposition permet d'augmenter la surface du socle d'alimentation électrique. En alternative, le boîtier pourrait présenter un logement inférieur prévu pour recevoir le socle d'alimentation électrique. En d'autres termes, le boîtier et le socle d'alimentation électrique reposent alors de manière indépendante sur la table ou le plan de travail.

Avantageusement encore, le sous-ensemble amovible repose sur un bâti appartenant au socle d'alimentation électrique. Cette disposition permet de diminuer la hauteur du sous-ensemble amovible.

Avantageusement alors, le réceptacle de vidange est monté amovible dans le bâti. Cette disposition facilite le déversement du contenu du réceptacle de vidange dans la cuve. En alternative, le socle d'alimentation électrique pourrait comporter un sous-ensemble électrique amovible par rapport au réceptacle de vidange.

Selon une forme de réalisation avantageuse, le bâti comporte une ouverture latérale prévue pour l'introduction du réceptacle de vidange. Cette disposition permet de retirer le réceptacle de vidange du bâti sans devoir déplacer le sous-ensemble amovible.

Avantageusement encore, le dispositif de vidange comprend un clapet à ressort susceptible d'occuper une position de rappel stable fermée et une position ouverte. Cette disposition permet de simplifier et de faciliter les opérations de vidange.

Avantageusement alors, le socle d'alimentation électrique comporte un organe d'actionnement prévu pour amener le clapet à ressort en position ouverte lorsque le sous-ensemble amovible est en place sur le socle d'alimentation électrique. Cette disposition permet d'éviter le déclenchement d'une opération de vidange lorsque le sous-ensemble amovible n'est pas en place sur le socle d'alimentation électrique.

Avantageusement alors, l'organe d'actionnement est ménagé dans un entonnoir. Cette disposition permet de faciliter les opérations de vidange et notamment de limiter la formation de salissures sur le socle d'alimentation électrique.

Avantageusement alors, l'entonnoir est monté amovible par rapport au socle d'alimentation électrique. Cette disposition permet de faciliter le nettoyage des parties de l'appareil en contact avec le bain de cuisson. Cette disposition permet également de simplifier la construction.

Avantageusement encore, un élément de transmission prévu pour actionner l'organe d'actionnement est monté mobile par rapport au réceptacle de vidange. Cette disposition permet de rendre nécessaire la présence du réceptacle de vidange dans le socle d'alimentation électrique pour autoriser la vidange du bain de cuisson.

Avantageusement alors, l'élément de transmission est monté sur une protubérance issue du fond du réceptacle de vidange. Cette disposition permet de rendre plus facile le démoulage d'un bloc de matière grasse figée dans le réceptacle de vidange après refroidissement.

Avantageusement encore, l'élément de transmission comporte une paroi supérieure annulaire agencée autour d'un orifice d'écoulement. Cette disposition permet de limiter la formation de salissures autour de l'élément de transmission.

Avantageusement encore le socle d'alimentation électrique comporte un élément de commande monté mobile prévu pour actionner l'élément de transmission. Cette disposition permet de simplifier la construction du réceptacle de vidange.

Avantageusement, pour une meilleure conservation de l'huile ou de la matière grasse, le réceptacle de vidange est susceptible d'être fermé par un couvercle.

Avantageusement, le dispositif de vidange comporte un filtre entre la cuve et le clapet à ressort. Cette disposition permet de débarrasser le bain de cuisson des particules susceptibles d'entraver le bon fonctionnement du clapet à ressort. Cette disposition permet également une meilleure conservation de l'huile ou de la matière grasse recueillie dans le réceptacle de vidange.

Avantageusement, le dispositif de vidange comporte un clapet thermostatique entre la cuve et le clapet à ressort. Cette disposition permet la mise en place du boîtier sur le socle de vidange sans risque d'écoulement du bain de cuisson contenu dans la cuve lorsque ledit bain de cuisson est encore trop chaud.

L'invention sera mieux comprise à l'étude d'un exemple de réalisation, pris à titre nullement limitatif, illustré dans les figures annexées 1 à 4, dans lesquelles :
- la figure 1 est une vue en coupe d'un appareil électrique de cuisson selon l'invention, comprenant un socle d'alimentation électrique logeant un réceptacle de vidange, et un sous ensemble amovible comportant une cuve logée dans un boîtier associé à un couvercle de boîtier.
- la figure 2 est une vue en perspective éclatée de l'appareil illustré sur la figure 1, le couvercle de boîtier n'étant pas représenté,
- la figure 3 est une vue en perspective éclatée du réceptacle de vidange et de son couvercle, illustrés sur les figures 1 et 2,
- la figure 4 est une vue en perspective du socle d'alimentation électrique illustré sur les figures 1 et 2, dans laquelle un sous-ensemble électrique a été retiré d'un bâti du socle d'alimentation électrique.

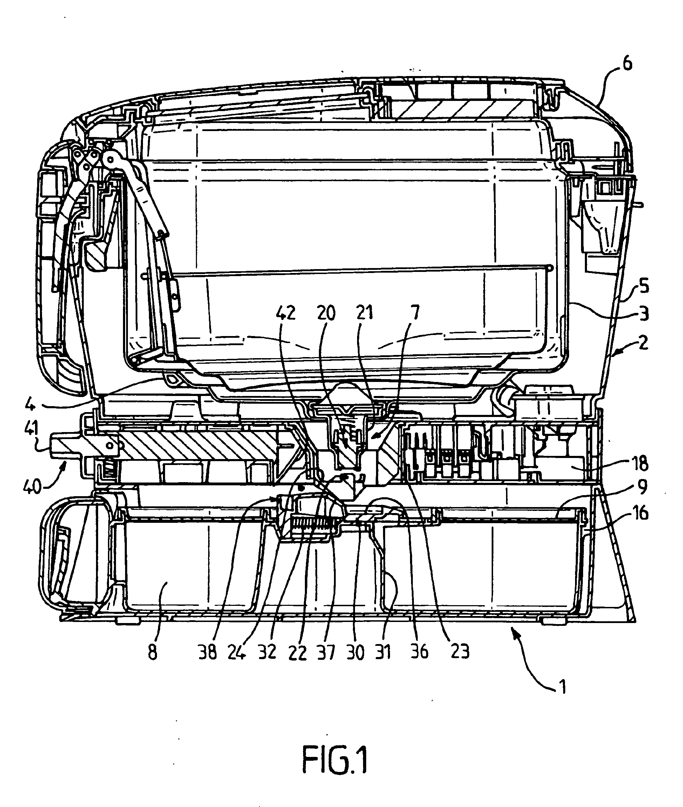

La figure 1 montre un appareil électrique de cuisson selon l'invention, tel qu'une friteuse électrique, comprenant un socle d'alimentation électrique 1 recevant un sous-ensemble amovible 2 comportant une cuve 3 associée à des moyens de chauffe 4. De préférence, les moyens de chauffe 4 sont étanches. La cuve 3 est agencée dans un boîtier 5 avantageusement réalisé en matière plastique. Un couvercle de boîtier 6 est monté sur le boîtier 5.

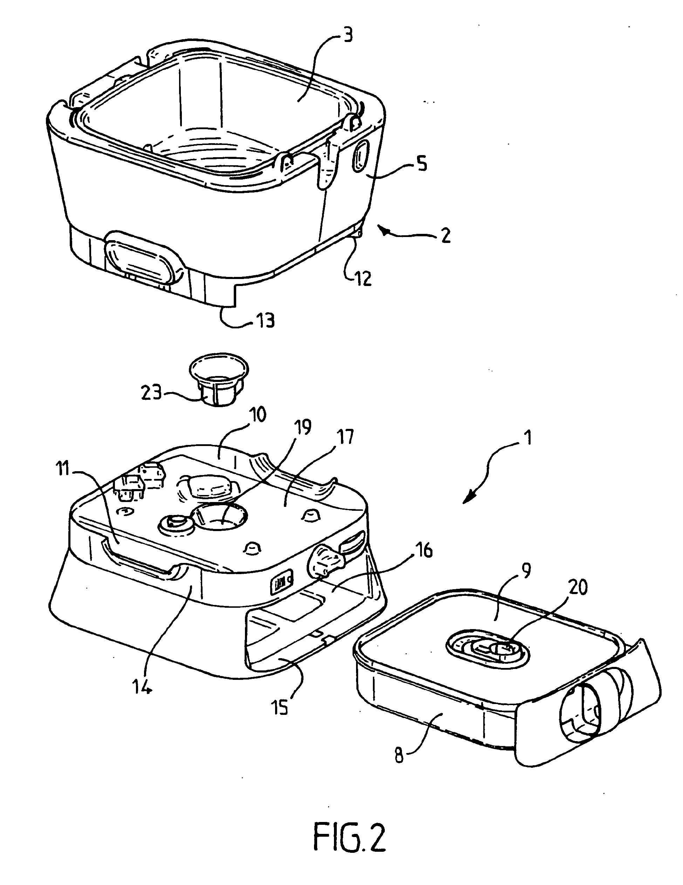

Le boîtier 5 est prévu pour reposer sur le socle d'alimentation électrique 1. A cet effet, tel que visible sur la figure 2, le socle d'alimentation électrique 1 présente deux logements supérieurs 10, 11 prévus pour recevoir deux éléments d'appui 12, 13 du boîtier 5.

Tel que visible sur la figure 1, la cuve 3 est munie d'un dispositif de vidange 7 prévu pour un déversement du bain de cuisson dans un réceptacle de vidange 8. Les éléments d'appui 12, 13 descendent plus bas que le dispositif de vidange 7 de manière à permettre un appui du sous-ensemble amovible 2 sur un support plan. Le dispositif de vidange 7 comprend un clapet à ressort 20 susceptible d'occuper une position de rappel stable fermée et une position ouverte dans laquelle le bain de cuisson peut s'écouler de la cuve 3. Le clapet à ressort 20 est agencé dans un conduit 21 issu du fond de la cuve 3. Si désiré le dispositif de vidange 7 peut comporter un filtre et/ou un clapet thermostatique entre la cuve 3 et le clapet à ressort 20.

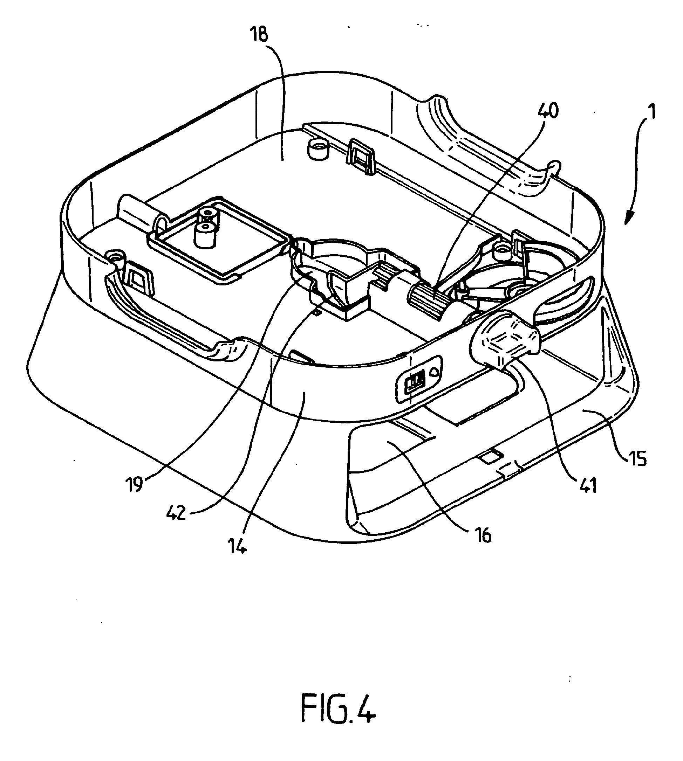

Le sous-ensemble amovible 2 repose sur un bâti 14 appartenant au socle d'alimentation électrique 1. Le réceptacle de vidange 8 est agencé dans le socle d'alimentation électrique 1. Plus particulièrement, le réceptacle de vidange 8 est monté amovible dans le bâti 14. Le bâti 14 comporte une ouverture latérale 15 prévue pour l'introduction du réceptacle de vidange 8 dans un logement 16. Le bâti 14 loge un sous-ensemble électrique 17, visible sur la figure 2. Les organes électriques de l'appareil tel que fusible thermique, thermostat, connecteurs d'alimentation électrique sont logés dans le sous-ensemble électrique 17. Le sous-ensemble électrique 17 est logé dans un compartiment 18 du bâti 14, visible sur les figures 1 et 4. Le compartiment 18 est disposé au dessus du logement 16.

Le socle d'alimentation électrique 1 comporte un organe d'actionnement 22 prévu pour amener le clapet à ressort 20 en position ouverte lorsque le sous-ensemble amovible 2 est en place sur le socle d'alimentation électrique 1. Plus particulièrement, l'organe d'actionnement 22 est ménagé dans un entonnoir 23, ledit entonnoir 23 étant monté coulissant en translation verticale par rapport au bâti 14.

Tel que bien visible sur la figure 1, le clapet à ressort 20 est agencé dans l'entonnoir 23 lorsque le sous-ensemble amovible 2 est en place sur le socle d'alimentation électrique 1. L'entonnoir 23 est avantageusement monté amovible par rapport au socle d'alimentation électrique 1. L'entonnoir 23 est mis en place dans une ouverture supérieure 19 du bâti 14 communiquant avec le logement 16, tel que mieux visible sur la figure 2.

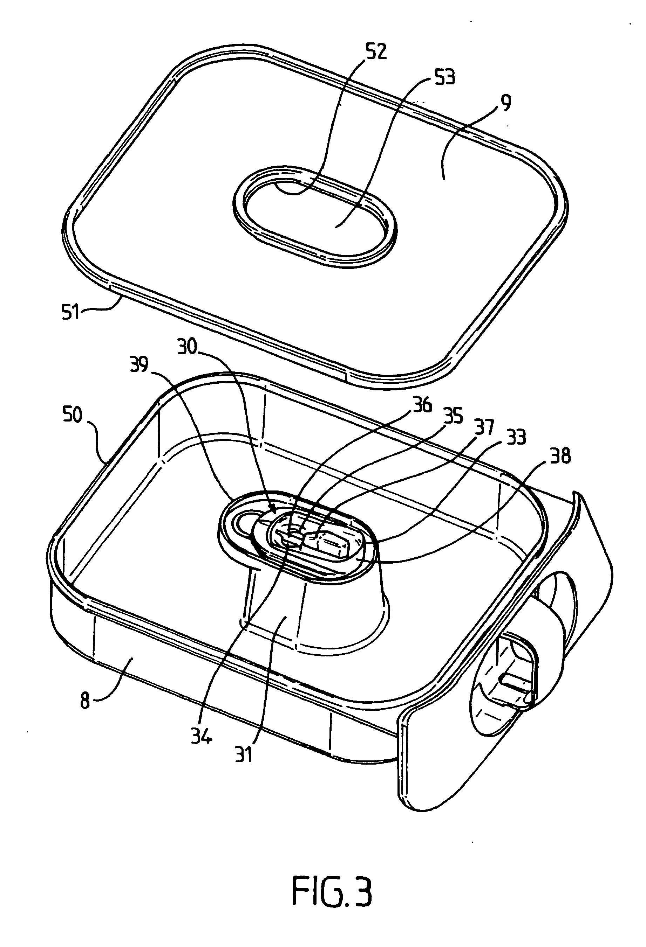

Un élément de transmission 30 est prévu pour actionner l'organe d'actionnement 22. L'élément de transmission 30 est monté mobile par rapport au réceptacle de vidange 8, tel que mieux visible sur la figure 3. Plus particulièrement, l'élément de transmission 30 est monté sur une protubérance 31 issue du fond du réceptacle de vidange 8. L'élément de transmission 30 est monté mobile contre un ressort de rappel 32, visible sur la figure 1.

L'élément de transmission 30 comporte une paroi supérieure annulaire 33 agencée autour d'un orifice d'écoulement 34 et d'un second orifice d'écoulement 35. L'orifice d'écoulement 34 et le second orifice d'écoulement 35 sont séparés par une nervure 36 permettant de rigidifier l'élément de transmission 30. La paroi supérieure annulaire 33 permet de canaliser la matière grasse issue de l'entonnoir 23 vers l'orifice d'écoulement 34 et le second orifice d'écoulement 35.

L'élément de transmission 30 présente une surface de came 37 prévue pour repousser une paroi inférieure 24 de l'organe d'actionnement 22. L'élément de transmission 30 présente une surface latérale 38 prévue pour coopérer avec la surface de commande 42 de l'élément de commande 40. La surface latérale 38 appartient à la paroi supérieure annulaire 33.

Le socle d'alimentation électrique 1 comporte un élément de commande 40 monté mobile, prévu pour actionner l'élément de transmission 30. Tel que mieux visible sur la figure 4, l'élément de commande 40 est monté mobile en rotation dans le bâti 14. L'élément de commande 40 présente un bouton de commande 41 monté à l'extérieur du bâti 14 et une surface de commande 42 logée dans l'ouverture supérieure 19.

Le réceptacle de vidange 8 est susceptible d'être fermé par un couvercle 9. Le réceptacle de vidange 8 comporte un bord périphérique 50 prévu pour recevoir une bordure externe 51 du couvercle 9. La protubérance 31 présente une nervure périphérique 39 prévue pour recevoir une bordure interne 52 du couvercle 9 ménagée autour d'une ouverture de remplissage 53.

La présente invention fonctionne et s'utilise de la manière suivante.

La surface de commande 42 de l'élément de commande 40 est prévue pour coopérer avec la surface latérale 38 de l'élément de transmission 30 de manière à repousser l'élément de transmission 30 contre le ressort de rappel 32. La surface de came 37 soulève alors la paroi inférieure 24 de l'organe d'actionnement 22. De ce fait l'organe d'actionnement 22 repousse le clapet à ressort 20 en position ouverte.

Pour cela, le réceptacle de vidange 8 doit être en place dans le logement 16 du socle d'alimentation électrique 1, et le sous-ensemble amovible 2 comportant la cuve 3 doit être en place sur le socle d'alimentation électrique 1.

L'utilisation de l'appareil proposé est ainsi particulièrement simple et sûre. L'élément de transmission 30 disposé sur le réceptacle de vidange 8 permet d'éviter la vidange du contenu de la cuve 3 en l'absence du réceptacle de vidange 8 dans le logement 16 du socle d'alimentation électrique 1.

A titre de variante, le dispositif de vidange 7 n'est pas nécessairement disposé en position centrale.

A titre de variante, la protubérance 31 peut être également issue d'une paroi latérale du réceptacle de vidange 8.

A titre de variante, le réceptacle de vidange 8 pourrait être solidaire du socle d'alimentation électrique 1.

A titre de variante le réceptacle de vidange 8 n'est pas nécessairement agencé entièrement dans le socle d'alimentation électrique 1. Notamment, une partie du réceptacle de vidange 8 pourrait s'étendre hors du socle d'alimentation électrique 1.

A titre de variante, le socle d'alimentation électrique 1 ne porte pas nécessairement le réceptacle de vidange 8.

A titre de variante, le socle d'alimentation électrique 1 pourrait comporter un sous-ensemble électrique amovible par rapport à un réceptacle de vidange.

La présente invention n'est nullement limitée à l'exemple de réalisation décrit et à ses variantes, mais englobe de nombreuses modifications dans le cadre des revendications.

## Revendications

1. Appareil électrique de cuisson, notamment friteuse électrique, comprenant un socle d'alimentation électrique (1) recevant un sous-ensemble amovible (2) comportant une cuve (3) prévue pour recevoir un bain de cuisson, la cuve (3) étant associée à des moyens de chauffe (4), la cuve (3) étant munie d'un dispositif de vidange (7) prévu pour un déversement du bain de cuisson dans un réceptacle de vidange (8), **caractérisé en ce que** le réceptacle de vidange (8) est agencé dans le socle d'alimentation électrique (1).

2. Appareil électrique de cuisson selon la revendication 1, **caractérisé en ce que** la cuve (3) est agencée dans un boîtier (5).

3. Appareil électrique de cuisson selon la revendication 2, **caractérisé en ce que** le boîtier (5) est prévu pour reposer sur le socle d'alimentation électrique (1).

4. Appareil électrique de cuisson selon l'une des revendications 1 à 3, **caractérisé en ce que** le sous-ensemble amovible (2) repose sur un bâti (14) appartenant au socle d'alimentation électrique (1).

5. Appareil électrique de cuisson selon la revendication 4, **caractérisé en ce que** le réceptacle de vidange (8) est monté amovible dans le bâti (14).

6. Appareil électrique de cuisson selon la revendication 5, **caractérisé en ce que** le bâti (14) comporte une ouverture latérale (15) prévue pour l'introduction du réceptacle de vidange (8).

7. Appareil électrique de cuisson selon l'une des revendications 1 à 6, **caractérisé en ce que** le dispositif de vidange (7) comprend un clapet à ressort (20) susceptible d'occuper une position de rappel stable fermée et une position ouverte.

8. Appareil électrique de cuisson selon la revendication 7, **caractérisé en ce que** le socle d'alimentation électrique (1) comporte un organe d'actionnement (22) prévu pour amener le clapet à ressort (20) en position ouverte lorsque le sous-ensemble amovible (2) est en place sur le socle d'alimentation électrique (1).

9. Appareil électrique de cuisson selon la revendication 8, **caractérisé en ce que** l'organe d'actionnement (22) est ménagé dans un entonnoir (23).

10. Appareil électrique de cuisson selon la revendication 9, **caractérisé en ce que** l'entonnoir (23) est monté amovible par rapport au socle d'alimentation électrique (1).

11. Appareil électrique de cuisson selon l'une des revendications 8 à 10, **caractérisé en ce qu'**un élément de transmission (30) prévu pour actionner l'organe d'actionnement (22) est monté mobile par rapport au réceptacle de vidange (8).

12. Appareil électrique de cuisson selon la revendication 11, **caractérisé en ce que** l'élément de transmission (30) est monté sur une protubérance (31) issue du fond du réceptacle de vidange (8).

13. Appareil électrique de cuisson selon l'une des revendications 11 ou 12, **caractérisé en ce que** l'élément de transmission (30) comporte une paroi supérieure annulaire (33) agencée autour d'un orifice d'écoulement (34).

14. Appareil électrique de cuisson selon l'une des revendications 11 à 13, **caractérisé en ce que** le socle d'alimentation électrique (1) comporte un élément de commande (40) monté mobile prévu pour actionner l'élément de transmission (30).

15. Appareil électrique de cuisson selon l'une des revendications 1 à 14, **caractérisé en ce que** le réceptacle de vidange (8) est susceptible d'être fermé par un couvercle (9).

## Claims

1. An electric cooking appliance, particularly an electric deep fryer, comprising an electric power supply base (1) receiving a removable sub-assembly (2) containing a vessel (3) for receiving a cooking bath, the vessel (3) being associated with a heating means (4), the vessel (3) being equipped with a draining device (7) for discharging the cooking bath into a draining container (8), **characterised in that** the draining container (8) is arranged in the electric power supply base (1).

2. An electric cooking appliance according to claim 1, **characterised in that** the vessel (3) is arranged inside a housing (5).

3. An electric cooking appliance according to claim 2, **characterised in that** the housing (5) is designed to rest on the electric power supply base (1).

4. An electric cooking appliance according to one of claims 1 to 3, **characterised in that** the removable sub-assembly (2) rests on a frame (14) belonging to the electric power supply base (1).

5. An electric cooking appliance according to claim 4, **characterised in that** the draining container (8) is mounted removably in the frame (14).

6. An electric cooking appliance according to claim 5, **characterised in that** the frame (14) contains a side opening (15) for introducing the draining container (8).

7. An electric cooking appliance according to one of claims 1 to 6, **characterised in that** the draining device (7) comprises a spring-loaded valve (20) that can occupy a closed stable return position and an open position.

8. An electric cooking appliance according to claim 7, **characterised in that** the electric power supply base (1) contains an actuating member (22) for bringing the spring-loaded valve (20) to open position when the removable sub-assembly (2) is in place on the electric power supply base (1).

9. An electric cooking appliance according to claim 8, **characterised in that** the actuating member (22) is arranged inside a funnel (23).

10. An electric cooking appliance according to claim 9, **characterised in that** the funnel (23) is mounted removably in relation the electric power supply base (1).

11. An electric cooking appliance according to one of claims 8 to 10, **characterised in that** a transmission element (30) for actuating the actuating member (22) is mounted removably in relation to the draining container (8).

12. An electric cooking appliance according to claim 11, **characterised in that** the transmission element (30) is mounted on a protrusion (31) from the bottom of the draining container (8).

13. An electric cooking appliance according to one of claims 11 or 12, **characterised in that** the transmission element (30) contains an annular upper wall (33) arranged around a drain hole (34).

14. An electric cooking appliance according to one of claims 11 to 13, **characterised in that** the electric power supply base (1) contains a removably mounted control element (40) for actuating the transmission element (30).

15. An electric cooking appliance according to one of claims 1 to 14, **characterised in that** the draining container (8) can be closed by a cover (9).

## Patentansprüche

1. Elektrisches Gargerät, insbesondere elektrische Fritteuse, umfassend einen Stromversorgungssockel (1), der eine abnehmbare Untereinheit (2) aufnimmt, die einen Behälter (3) umfasst, der für die Aufnahme eines Garbades vorgesehen ist, wobei der Behälter (3) mit Heizmitteln (4) verbunden ist, wobei der Behälter (3) mit einer Ableervorrichtung (7) ausgestattet ist, die zum Ableiten des Garbades in ein Ableergefäß (8) vorgesehen ist, **dadurch gekennzeichnet, dass** das Ableergefäß (8) im Stromversorgungssockel (1) angeordnet ist.

2. Elektrisches Gargerät nach Anspruch 1, **dadurch gekennzeichnet, dass** der Behälter (3) in einem Gehäuse (5) angeordnet ist.

3. Elektrisches Gargerät nach Anspruch 2, **dadurch gekennzeichnet, dass** das Gehäuse (5) vorgesehen ist, um auf dem Stromversorgungssockel (1) aufzuliegen.

4. Elektrisches Gargerät nach einem der Ansprüche 1 bis 3, **dadurch gekennzeichnet, dass** die abnehmbare Untereinheit (2) auf einem Gestell (14) aufliegt, das zum Stromversorgungssockel (1) gehört.

5. Elektrisches Gargerät nach Anspruch 4, **dadurch gekennzeichnet, dass** das Ableergefäß (8) herausnehmbar im Gestell (14) angebracht ist.

6. Elektrisches Gargerät nach Anspruch 5, **dadurch gekennzeichnet, dass** das Gestell (14) eine seitliche Öffnung (15) umfasst, die zum Einsetzen des Ableergefäßes (8) vorgesehen ist.

7. Elektrisches Gargerät nach einem der Ansprüche 1 bis 6, **dadurch gekennzeichnet, dass** die Ableervorrichtung (7) eine Federklappe (20) umfasst, die eine stabile, geschlossene Rückstellposition und eine offene Position einnehmen kann.

8. Elektrisches Gargerät nach Anspruch 7, **dadurch gekennzeichnet, dass** der Stromversorgungssockel (1) ein Betätigungsglied (22) umfasst, das vorgesehen ist, um die Federklappe (20) in die offene Position zu bringen, wenn sich die abnehmbare Untereinheit (2) auf dem Stromversorgungssockel (1) befindet.

9. Elektrisches Gargerät nach Anspruch 8, **dadurch gekennzeichnet, dass** das Betätigungsglied (22) in einem Trichter (23) eingerichtet ist.

10. Elektrisches Gargerät nach Anspruch 9, **dadurch gekennzeichnet, dass** der Trichter (23) in Bezug auf den Stromversorgungssockel (1) abnehmbar angebracht ist.

11. Elektrisches Gargerät nach einem der Ansprüche 8 bis 10, **dadurch gekennzeichnet, dass** ein Übertragungselement (30), das für die Betätigung des Betätigungsgliedes (22) vorgesehen ist, in Bezug auf das Ableergefäß (8) beweglich angebracht ist.

12. Elektrisches Gargerät nach Anspruch 11, **dadurch gekennzeichnet, dass** das Übertragungselement (30) auf einem Vorsprung (31) angebracht ist, der aus dem Boden des Ableergefäßes (8) hervorgeht.

13. Elektrisches Gargerät nach einem der Ansprüche 11 oder 12, **dadurch gekennzeichnet, dass** das Übertragungselement (30) eine ringförmige obere Wand (33) umfasst, die um eine Abfließöffnung (34) herum angeordnet ist.

14. Elektrisches Gargerät nach einem der Ansprüche 11 bis 13, **dadurch gekennzeichnet, dass** der Stromversorgungssockel (1) ein Steuerungselement (40) umfasst, das beweglich angebracht ist, um das Übertragungselement (30) zu betätigen.

15. Elektrisches Gargerät nach einem der Ansprüche 1 bis 14, **dadurch gekennzeichnet, dass** das Ableergefäß (8) von einem Deckel (9) verschlossen werden kann.
